# EUROPEAN PATENT APPLICATION

(11) **EP 1 098 517 A2**
(43) Date of publication of application: **09.05.2001**
(21) Application number: 00309001.6
(22) Date of filing: 13.10.2000
(51) Int. Cl.: H04N 5/52

(54) **AGC circuit eliminating influence of audio intermediate frequency signals**

(30) Priority: 04.11.1999 JP 31376299
(71) Applicant: ALPS ELECTRIC CO., LTD., Ota-ku Tokyo 145 (JP)
(72) Inventor: Kawasaki, Makoto, Ota-ku, Tokyo 145 (JP)
(74) Representative: Kensett, John Hinton

(57) **Abstract**

The present invention provides an AGC circuit for performing a positive AGC on the basis of the picture intermediate frequency signals, with signal level controller means (1) receiving intermediate frequency signals of television and AGC voltage for outputting the intermediate frequency signals of which the level is modified by the AGC voltage; filter means (2) for extracting picture intermediate frequency signals in the intermediate frequency signals output from the signal level controller means; and detector means (7) for detecting the extracted picture intermediate frequency signals for outputting direct current voltage proportional to the level of the intermediate frequency signals input to the level controller means (1) in which the direct current voltage is input to the level controller means for the AGC voltage.

## Description

### BACKGROUND OF THE INVENTION

### Field of the Invention:

The present invention relates to an AGC circuit used for a television signal transmitters in a CATV system and the like. Description of the Prior Art:

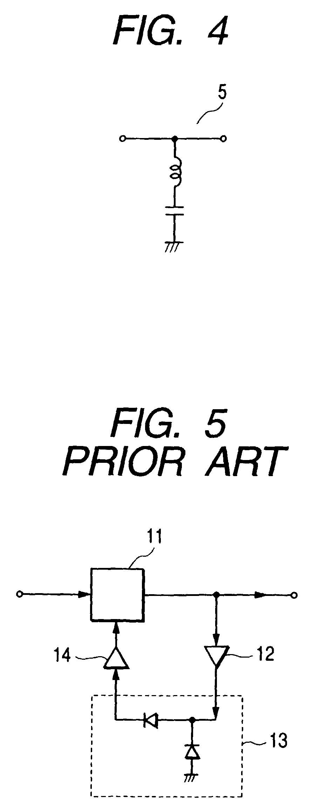

Fig. 5 shows an AGC circuit of the Prior Art, which comprises a level controller circuit 11 such as a variable attenuator circuit or a variable gain amplifier circuit that television intermediate frequency signals are input, an intermediate frequency signal amplifier circuit 12 for amplifying the intermediate signals output from the level controller means, a detector circuit 13 for detecting thus amplified intermediate frequency signals to output as direct current (dc) voltage, and a dc amplifier 14 for amplifying the dc voltage.

Since the output dc voltage may be proportional to the input intermediate frequency signal level, the intermediate frequency signal level output from the intermediate frequency signal amplifier circuit 12 can be approximately constant if inputting this dc voltage to the level controller circuit 11 as the AGC voltage.

The program sources underlying the intermediate frequency signals may vary, from intermediate frequency signals for retransmission of other television signals received from another station, to intermediate frequency signals for a local access program prerecorded. In either case, the picture intermediate frequency signals is higher than the audio intermediate frequency signals; for example a specification used in the U.S. specifies 41.25 MHz for the audio intermediate frequency signals, and 45.75 MHz for the picture intermediate frequency signals.

In the Prior Art AGC circuit, the intermediate frequency signals input to the detector circuit includes the picture intermediate frequency signals and the audio intermediate frequency signals, so that there may be happen a case in which the audio intermediate frequency signal level may become higher than the picture intermediate frequency signal level, in correspondence with the program source used.

In such a circumstance as described above, the detector circuit may detects the audio intermediate frequency signals and input the erroneous AGC voltage on the basis of the audio intermediate frequency signals into the level controller circuit. As a result, the control may cause the picture intermediate frequency signals not to become a constant level, also in the receiver there will be a problem that the decoded picture signals may fluctuate.

### SUMMARY OF THE INVENTION

The present invention has been made in view of the above circumstances and has an object to overcome the above problems and to provide an AGC circuit for performing a positive AGC on the basis of the picture intermediate frequency signals.

In order to achieve the above object, the AGC circuit in accordance with the present invention comprises signal level controller means receiving intermediate frequency signals of television and AGC voltage for outputting the intermediate frequency signals of which the level is modified by the AGC voltage; filter means for extracting picture intermediate frequency signals in the intermediate frequency signals output from the signal level controller means; and detector means for detecting the extracted picture intermediate frequency signals for outputting direct current voltage proportional to the level of the intermediate frequency signals input to the level controller means; in which the direct current voltage is input to the level controller means as the AGC voltage.

Preferably, the filter means is comprised of band pass filter and the pass band frequencies of the band pass filters is set to the frequencies of the picture intermediate frequency band signals.

The filter means may comprise a high-pass filter and the cutoff frequency of the high-pass filter is set between the frequency of audio intermediate frequency signals and the frequency of picture intermediate frequency signals in the intermediate frequency signals.

The filter means may comprise a band-eliminating filter and the attenuation frequency of the band-eliminating filter is set to the frequency of the audio intermediate frequency signals.

Embodiments of the present invention, will now be described, by way of example only, with reference to the accompanying diagrammatic drawings, in which:
Fig. 1 is a schematic circuit diagram illustrating the arrangement of the AGC circuit in accordance with the present invention;
Fig. 2 is a more practical circuit diagram of filter means used in the AGC circuit in accordance with the present invention;
Fig. 3 is a more practical circuit diagram of another filter means used in the AGC circuit in accordance with the present invention;
Fig. 4 is a more practical circuit diagram of yet another filter means used in the AGC circuit in accordance with the present invention; and
Fig. 5 is a circuit diagram illustrating the arrangement of an AGC circuit of the Prior Art.

### DETAILED DESCRIPTION OF THE PREFERRED EMBODIMENTS

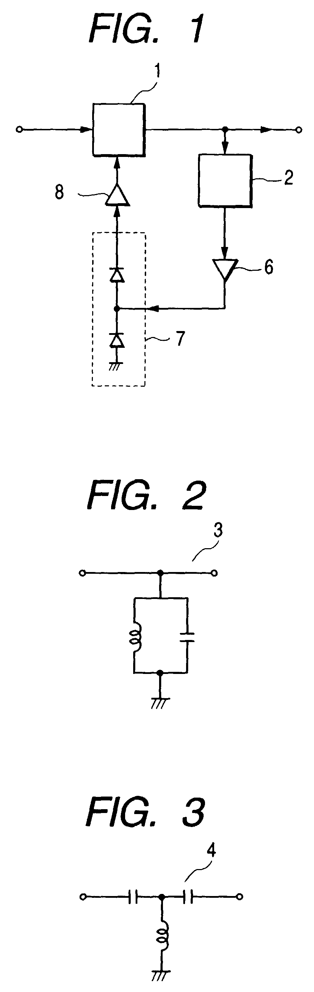

A detailed description of one preferred embodiment embodying the present invention will now be given referring to the accompanying drawings, in particular to Fig. 1 through Fig. 4. Now referring to the drawings, Fig. 1 shows an arrangement of AGC circuit in accordance with the present invention, in which signal level controller means 1 is comprised of a variable attenuator circuit or a variable gain amplifier circuit and so on, the output level of which is controlled by the AGC voltage. The intermediate frequency signals therefor may be the intermediate frequency signals for retransmission of other television signals received, or the intermediate frequency signals for a prerecorded local access program. In such a case the frequency of the picture intermediate frequency signals (may be referred to as picture intermediate frequency) is higher than the frequency of the audio intermediate frequency signals (may be referred to as audio intermediate frequency), for example a specification used in the U.S. specifies 41.25 MHz for the audio intermediate frequency signals, and 45.75 MHz for the picture intermediate frequency signals.

The intermediate frequency signals output from the signal level controller means 1 will be frequency converted to the television signals of a predetermined channel by a frequency converter circuit not shown in the figure to transmit to the subscribers of a CATV system and the like.

On the other hand the intermediate frequency signals output from the signal level controller means 1 may also be input to filter means 2 for extracting the picture intermediate frequency signals in the intermediate frequency signals. The filter means 2 may be comprised of for example a band pass filter 3, as shown in Fig. 2, including a simple tuning circuit, which may be tuned to the frequency of the picture intermediate frequency signals, a high-pass filter 4, as shown in Fig. 3, having a cutoff frequency between the audio intermediate frequency and the picture intermediate frequency, or a band-eliminating filter 5 (band erase filter) as shown in Fig. 4 including a trap circuit for attenuating the audio intermediate frequency signals.

Thus the filter means 2 will extract the picture intermediate frequency signals by erasing the audio intermediate frequency signals.

Thus extracted picture intermediate frequency signals will be amplified by an intermediate frequency signal amplifier circuit 6 and detected by a detector circuit 7 to obtain a dc voltage, which is proportional to the level of intermediate frequency signals. The detector circuit 7 may be comprised of for example a well-known diode detector circuit constituted of two diodes, 7a and 7b.

The dc voltage after detection is amplified to a predetermined level by a dc amplifier circuit 8, the output voltage of which is input to the controller terminal of the signal level controller means 1 as the AGC voltage.

In the above configuration, the dc voltage after detection is output proportional to the level of input intermediate frequency signals. If this voltage is input to the signal level controller means 1 as the AGC voltage, the level of intermediate frequency signals output from the signal level controller means 1 will be controlled so as to be approximately constant.

As have been stated above, the AGC circuit in accordance with the present invention comprises signal level controller means receiving intermediate frequency signals of television and AGC voltage for outputting the intermediate frequency signals of which the level is modified by the AGC voltage, filter means for extracting picture intermediate frequency signals in the intermediate frequency signals output from the signal level controller means, and detector means for detecting the extracted picture intermediate frequency signals for outputting direct current voltage proportional to the level of the intermediate frequency signals, in which the direct current voltage is input to the level controller means as the AGC voltage. As a result a positive AGC may be achieved on the basis of the picture intermediate frequency signals.

Also since in the AGC circuit in accordance with the present invention, the filter means is comprised of band pass filter and the pass band frequencies of the band pass filters is set to the frequencies of the picture intermediate frequency band signals, the picture intermediate frequency signals may be positively retrieved.

Furthermore since in the AGC circuit in accordance with the present invention, the filter means is comprised of high-pass filter and the cutoff frequency of the high-pass filter is set between the frequency of audio intermediate frequency signals and the frequency of picture intermediate frequency signals in the intermediate frequency signals, only the picture intermediate frequency signals may be retrieved with the audio signals eliminated.

In addition since in the AGC circuit in accordance with the present invention, the filter means is comprised of band-eliminating filter and the attenuation frequency of the band-eliminating filter is set to the frequency of the audio intermediate frequency signals, the picture intermediate frequency signals may be retrieved with the audio intermediate frequency signals eliminated, with a simpler configuration.

## Claims

1. An AGC circuit comprising:
signal level controller means receiving intermediate frequency signals of television and AGC voltage for outputting the intermediate frequency signals of which the level is modified by the AGC voltage;
filter means for extracting picture intermediate frequency signals in the intermediate frequency signals output from the signal level controller means; and
detector means for detecting the extracted picture intermediate frequency signals for outputting direct current voltage proportional to the level of the intermediate frequency signals input to the level controller means; wherein
the direct current voltage is input to the level controller means as the AGC voltage.

2. An AGC circuit according to claim 1, wherein:
the filter means is comprised of band pass filter, and the pass band frequencies of the band pass filters is set to the frequencies of the picture intermediate frequency band signals.

3. An AGC circuit according to claim 1, wherein:
the filter means is comprised of high-pass filter, and the cutoff frequency of the high-pass filter is set between the frequency of audio intermediate frequency signals and the frequency of picture intermediate frequency signals in the intermediate frequency signals.

4. An AGC circuit according to claim 1, in which:
the filter means is comprised of band-eliminating filter and the attenuation frequency of the band-eliminating filter is set to the frequency of the audio intermediate frequency signals.
